# EUROPEAN PATENT APPLICATION

(11) **EP 1 306 652 A1**
(43) Date of publication of application: **02.05.2003**
(21) Application number: 01932203.1
(22) Date of filing: 22.05.2001
(51) Int. Cl.: G01J 1/42, H04N 5/32

(54) **STREAK CAMERA APPARATUS**

(30) Priority: 26.05.2000 JP 2000157025
(71) Applicant: Hamamatsu Photonics K.K., Shizuoka-ken 435-8558 (JP)
(72) Inventor: MIZUSHIMA, Hiroshi, Hamamatsu-shi, Shizuoka 435-8558 (JP); SUZUKI, Kazutaka, Hamamatsu-shi, Shizuoka 435-8558 (JP)
(74) Representative: Musker, David Charles
(86) International application number: JP0104280
(87) International publication number: WO01090709

(57) **Abstract**

The timing by which a CCD camera drive circuit 7 switches the operating state of an interline CCD camera 5 from a charge sweep-out operating state to an exposure operating state is delayed by a control circuit 10 in relation to the time at which measured light R is emitted by a sample 9, making it possible to reduce the noise generated in the interline CCD camera 5 by a neutron beam emitted by the sample 9 concurrently with the measured light R.

## Description

### Technical Field

The present invention relates to a streak camera device in which temporal variations in the intensity of measured light are measured as streak images.

### Background Art

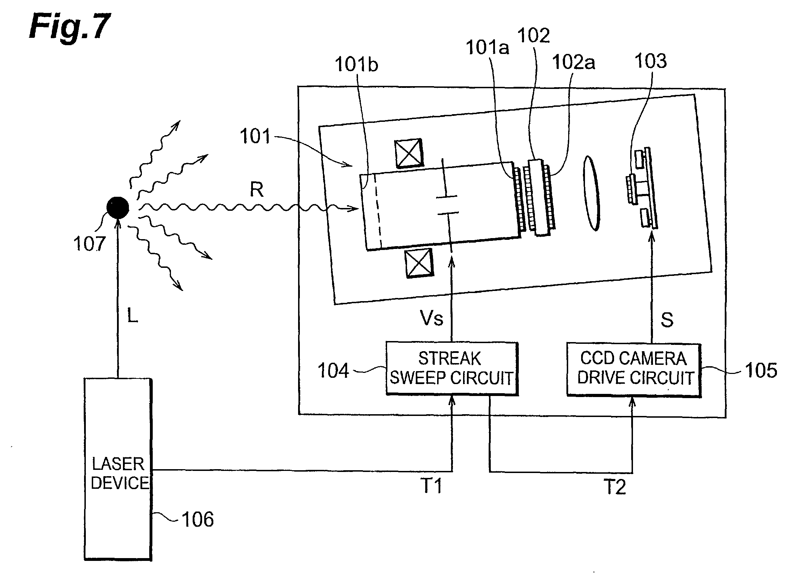

A conventional streak camera device comprises a streak tube 101 whereby temporal variations in the intensity of measured light are converted to a streak image and formed on a fluorescent screen 101a, an image intensifier 102 whereby the streak image formed on the fluorescent screen 101a of the streak tube 101 is amplified and displayed on a fluorescent screen 102a, a frame-transfer CCD camera 103 for capturing the optical image formed on the fluorescent screen 102a of the image intensifier 102, a streak sweep circuit 104 for controlling the operation of the streak tube 101, and a CCD camera drive circuit 105 for energizing the frame-transfer CCD camera 103, as shown in Fig. 7. A sample 107 and a laser device 106 for causing the sample 107 to emit measured light Rare provided outside the streak camera device.

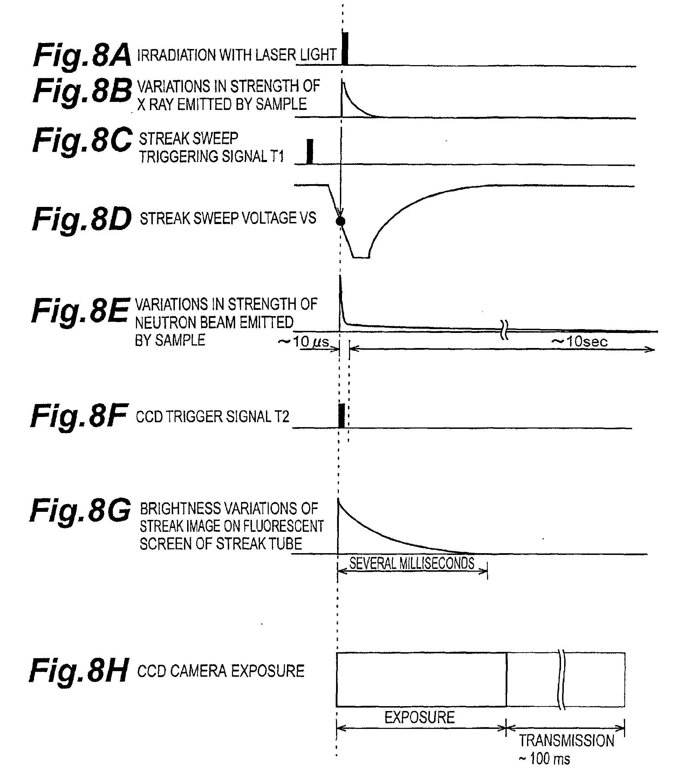

The operation of the conventional streak camera device will now be described with reference to Figs. 7 and 8A-8H. The sample 107 is irradiated with laser light L from the laser device 106 (Figs. 7 and 8A), and an X ray or other type of measured light R is emitted at the same time by the sample 107 (Figs. 7 and 8B). The measured light R reaches the photoelectric surface 101b of the streak tube 101 while a streak sweep voltage Vs is applied to the streak tube 101 by the streak sweep circuit 104, which has received a streak sweep triggering signal T1 from the laser device 106 (Figs. 8C and 8D). A streak image is thereby formed on the fluorescent screen 101a of the streak tube 101. The streak image continues to glow for several milliseconds because the substance constituting the fluorescent screen 101a has afterglow characteristics. A neutron beam is emitted by the sample, but the beam decays rapidly over time (Fig. 8E).

The streak image is amplified by the image intensifier 102, and an amplified streak image is formed on the fluorescent screen 102a of the image intensifier 102. The amplified streak image on the fluorescent screen 102a of the image intensifier 102 is captured by the frame-transfer CCD camera 103.

At this point, exposure is started in the frame-transfer CCD camera 103 by a command signal S from the CCD camera drive circuit 105, which has received a CCD trigger signal T2 from the streak sweep circuit 104 (Figs. 8F and 8G). At this point, the exposure start timing is synchronized with the irradiation of the sample 107 by laser light L, as is evident from a comparison between Figs. 8A and 8H.

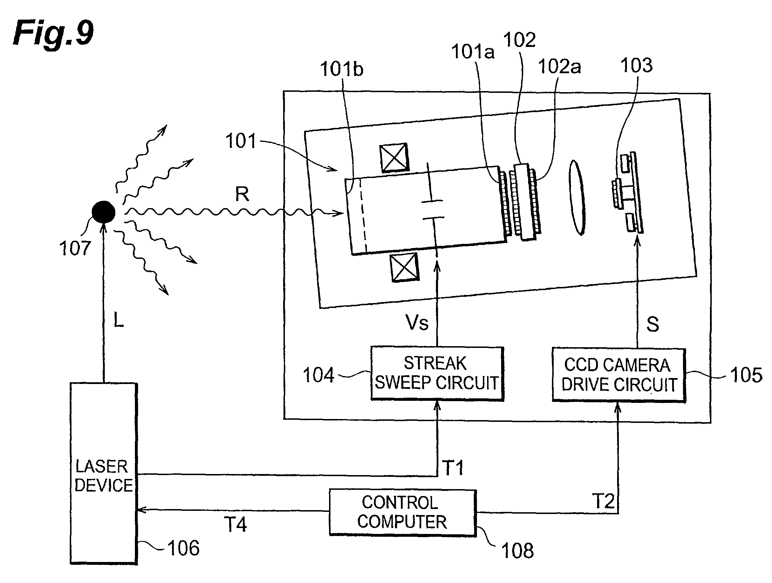

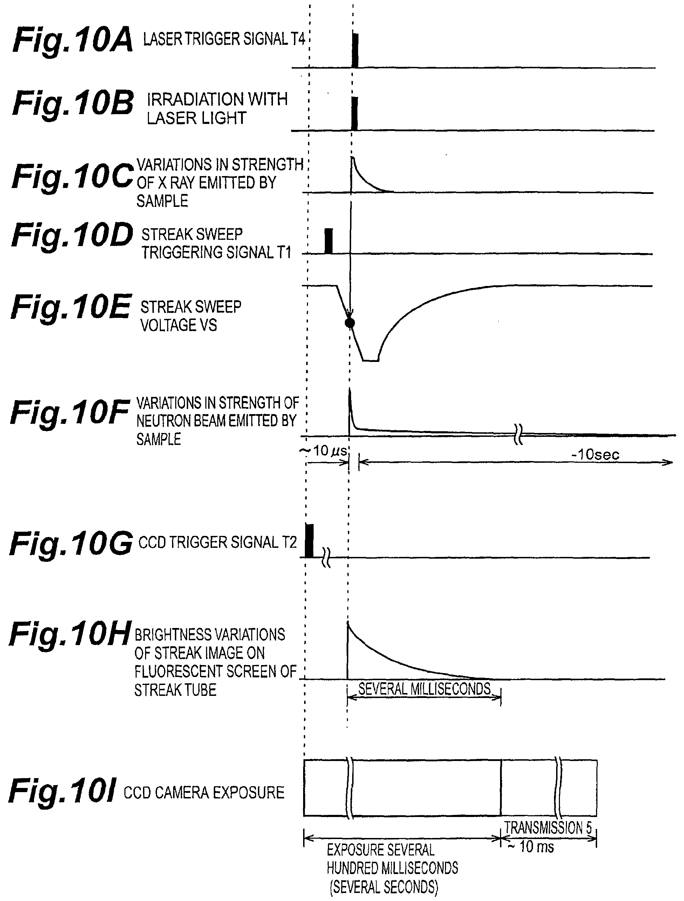

The conventional streak camera device is sometimes equipped with a control computer 108, which is disposed between the laser device 106 and the CCD camera drive circuit 105, as shown in Fig. 9. A laser trigger signal T4 is transmitted from the control computer 108 to the laser device 106 (Fig. 10A), laser light is irradiated at the same time (Fig. 10B), and X-ray emission starts simultaneously with the laser light irradiation (Fig. 10C). The streak sweep triggering signal T1 is output (Fig. 10D) before the laser trigger signal T4 is output, and the sweep of the voltage applied to the streak camera device is started in synchronism with this trigger signal (Fig. 10E). A neutron beam is emitted by the sample, but the beam decays rapidly over time (Fig. 10F).

The CCD trigger signal T2 is transmitted to the CCD camera drive circuit 105 before the laser trigger signal T4 is output (Fig. 10G). The brightness of the streak image on the fluorescent screen of the streak tube increases concurrently with the irradiation of laser light and decreases over time (Fig. 10H). The exposure of the CCD camera continues from the time at which the CCD trigger signal T2 is output until the brightness of the streak image becomes zero (Fig. 10I). In such a structure, the CCD trigger signal T2 is transmitted to the CCD camera drive circuit 105 at a moment that precedes by a certain period the time at which the laser trigger signal T4 is transmitted to the laser device 106, and exposure of the frame-transfer CCD camera 103 is started before measured light R is emitted (Fig. 10I), as can be seen in Figs. 10A, 10G, and 10I.

### Disclosure of the Invention

The above conventional streak camera device has drawbacks such as those described in *Rev. Sci. Instrum.,* 68 (1), January 1997, pp. 628-631. These drawbacks are described below.

A neutron beam is emitted in addition to an X ray by the sample 107 when the sample 107 is irradiated with laser light L. The frame-transfer CCD camera 103 in the exposure mode is subjected to the action of the neutron beam because exposure of the frame-transfer CCD camera 103 starts at the same time as the sample 107 is irradiated with laser light L (that is, at the same time the measured light is emitted) or before the irradiation is started, as described above.

An electric charge is induced in the frame-transfer CCD camera 103 if the neutron beam emitted by the sample 107 reaches the frame-transfer CCD camera 103. An electric charge is also induced in the frame-transfer CCD camera 103 when alpha particles or protons generated as secondary particles by the neutron beam reach the frame-transfer CCD camera 103.

The electric charge thus generated is transmitted to the outside together with the signal to be obtained by the measurement, and is detected as undesirable noise.

The image intensifier 102 used in a conventional streak camera device contains an MCP (microchannel plate; not shown), which is an electron multiplier, and the MCP is also affected by the neutron beam emitted by the sample 107. Specifically, electrons are generated inside the MCP when a neutron beam or alpha particles or protons generated as secondary particles by the neutron beam reaches the MCP. These electrons are multiplied by the MCP as such, and an optical image is formed on the fluorescent screen 102a of the image intensifier 102. The optical image resulting from the neutron beam or the like is captured by the frame-transfer CCD camera 103 and is ultimately detected as undesirable background noise.

An object of the present invention is to provide a streak camera device in which the noise resulting from a neutron beam emitted by the measurement sample can be reduced.

Aimed at attaining the stated object, the streak camera device in accordance with the present invention is characterized by comprising a streak tube for converting time-sequential intensity variation of light to be measured to a streak image, amplification means for amplifying the streak image, an interline CCD camera for capturing the streak image amplified by the amplification means, a streak sweep circuit for controlling the operation of the streak tube, a CCD camera drive circuit wherein the operating state of the interline CCD camera is switched from a charge sweep-out operating state to an exposure operating state, and a control circuit whereby the timing by which the CCD camera drive circuit switches the operating state of the interline CCD camera from a charge sweep-out operating state to an exposure operating state is delayed in relation to the time at which the measured light is emitted.

A neutron beam is emitted by the sample in addition to an X ray (which is the measured light) when the sample is irradiated with laser light, and the period in which the generation of the neutron beam is at its maximum lasts tens of microseconds after the laser light reaches the sample. At the same time, the afterglow period of the streak image formed by the streak tube is approximately several milliseconds. For example, P-43, which is used as a fluorescent screen, has an afterglow period (time until the emission intensity decreases to 10%) of about 1 msec. Some continue to glow for 50-100 msec, such as P-39.

It is therefore possible to reduce the effect of the neutron beam during CCD camera exposure if the start of exposure in the CCD camera is delayed by several tens of micrometers in relation to the time at which laser light is irradiated (time at which an X ray and a neutron beam are emitted) and if the exposure of the CCD camera is started after the intensity of the neutron beam has been sufficiently reduced. Since the fluorescent screen continues to glow for several milliseconds, the information required for a measurement will still be obtained even if the exposure start timing of the CCD camera is delayed.

The streak camera device according to the present invention comprises a control circuit whereby the timing by which a CCD camera drive circuit switches the operating state of a CCD camera (inline type) from a charge sweep-out operating state to an exposure operating state (that is, the timing by which the CCD camera begins exposure) is delayed in relation to the time at which measured light is emitted. The timing by which the CCD camera begins exposure can therefore be delayed by a certain delay period δ (several tens of microseconds) in relation to the time at which the laser light is irradiated (time at which an X ray and a neutron beam are emitted) . It is therefore possible to reduce the degree to which the CCD camera is affected by the neutron beam or the like during exposure because the CCD camer a begins exposure after the intensity of the neutron beam has been sufficiently reduced.

Delaying the exposure start timing of the CCD camera in relation to the time at which laser light is irradiated does not automatically make it possible to adequately prevent the neutron beam or the like from affecting the CCD camera. Specifically, an electric charge is induced in the CCD camera when a neutron beam or alpha particles or protons generated as secondary particles by the neutron beam reach the CCD camera before exposure is started. The charge thus induced is accumulated in the CCD camera, transmitted outside together with the electric charge induced by the measured light (X ray) after exposure is completed, and measured as noise.

In view of this, an interline CCD camera is used in the streak camera device of the present invention instead of the frame-transfer CCD camera commonly used in conventional streak camera devices. An interline CCD camera allows the electric charge accumulated in the CCD camera to be swept out more rapidly than does a frame-transfer CCD camera, with the result that the electric charge induced in the CCD camera can be swept out in a very short time (less than the delay period δ) even when this charge results from the arrival of a neutron beam or the like to the CCD camera before the start of exposure. It is therefore possible to reduce the bad effect of the neutron beam or the like that the interline CCD camera suffers before the exposure is started.

In the streak camera device of the present invention, the timing by which the CCD camera drive circuit switches the operating state of the CCD camera from a charge sweep-out operating state to an exposure operating state is delayed in this manner by a control circuit in relation to the time at which measured light is emitted, allowing exposure to be started in the CCD camera after the neutron beam emitted by the sample has been reduced. As a result, it is possible to reduce the noise brought about by a neutron beam or alpha particles or protons generated as secondary particles by the neutron beam during CCD camera exposure.

In addition, the electric charge induced by the neutron beam or the like in the interline CCD camera can be swept out using an interline CCD camera by bringing the interline CCD camera into a charge sweep-out operating state before the start of exposure. As a result, it is possible to reduce the noise brought about by a neutron beam or the like in the interline CCD camera between the time at which measured light and neutron beam are emitted by the sample and the time at which the exposure starts.

The streak camera device according to the present invention should preferably be configured such that the timing by which the CCD camera drive circuit switches the operating state of the interline CCD camera from a charge sweep-out operating state to an exposure operating state is set by the control circuit between a moment that precedes by a certain period the time at which measured light is emitted, and a moment that lags behind this time by a certain period.

Configuring the control circuit in this manner allows the timing by which the CCD camera drive circuit switches the operating state of the interline CCD camera from a charge sweep-out operating state to an exposure operating state to be adequately adjusted between a moment that precedes by a certain period the time at which measured light is emitted, and a moment that lags behind this time by a certain period. An accurate measurement can therefore be made because the measurement is accompanied by the monitoring of the ratio (so-called S/N ratio) of the signal to be obtained by the measurement and the noise brought about by a neutron beam or the like.

The streak camera device of the present invention should preferably be further provided with drive means whereby the amplification means for amplifying streak images is energized with a delay in relation to the time at which measured light is emitted.

Selecting this configuration allows the timing by which voltage is applied to MCP, which is an electron multiplier contained in an image intensifier (amplification means for amplifying streak images), to be delayed until the intensity of the neutron beam is reduced by the drive means, making it possible to reduce the effect of the neutron beam or another particle beam on the MCP. Specifically, no voltage is applied to the MCP in the period of maximum generation of the neutron beam if the time at which the voltage is applied to the MCP is delayed in relation to the time at which measured light is emitted, with the result that even if electrons are induced in the MCP by the neutron beam or the like, these electrons will still be prevented from being multiplied.

Consequently, the noise generated in the MCP by a neutron beam or other particle beam can be reduced several-thousand-fold in comparison with cases in which voltage is applied to an MCP without being delayed, as in the prior art. Applying voltage to the MCP several tens of microseconds after the intensity of the neutron beam has decreased still allows measurements to be conducted in a satisfactory manner because the streak image on the fluorescent screen of the streak tube continues to glow for several milliseconds.

The aforementioned amplification means should preferably be devoid of an MCP. Specifically, using an MCP-free amplification means prevents a neutron beam or the like from affecting the MCP, making it possible to eliminate the noise brought about by such a particle beam.

### Brief Description of the Drawings

Fig. 1 is a schematic depicting the structure of a streak camera device pertaining to a first embodiment;
Figs. 2A, 2B, 2C, 2D, 2E, 2F, 2G, 2H, 2I, and 2J are timing charts designed to illustrate the operation of the streak camera device pertaining to the first embodiment;
Fig. 3 is a schematic depicting the structure of a streak camera device pertaining to a second embodiment;
Figs. 4A, 4B, 4C, 4D, 4E, 4F, and 4G are timing charts designed to illustrate the operation of the streak camera device pertaining to the second embodiment;
Fig. 5 is a schematic depicting the structure of a streak camera device pertaining to a third embodiment;
Figs. 6A, 6B, 6C, 6D, 6E, 6F, 6G, 6H, 6I, and 6J are timing charts designed to illustrate the operation of the streak camera device pertaining to the third embodiment;
Fig. 7 is a schematic depicting the structure of a first example of a conventional streak camera device;
Figs. 8A, 8B, 8C, 8D, 8E, 8F, 8G, and 8H are timing charts designed to illustrate the operation of the first example of a conventional streak camera device;
Fig. 9 is a schematic depicting the structure of a second example of a conventional streak camera device; and
Figs. 10A, 10B, 10C, 10D, 10E, 10F, 10G, 10H, and 10I are timing charts designed to illustrate the operation of the second example of a conventional streak camera device.

### Best Modes for Carrying Out the Invention

Embodiments of a streak camera device will now be described with reference to the accompanying drawings. Identical elements will be designated by the same symbols, and overlapping descriptions will be omitted.

### (First Embodiment)

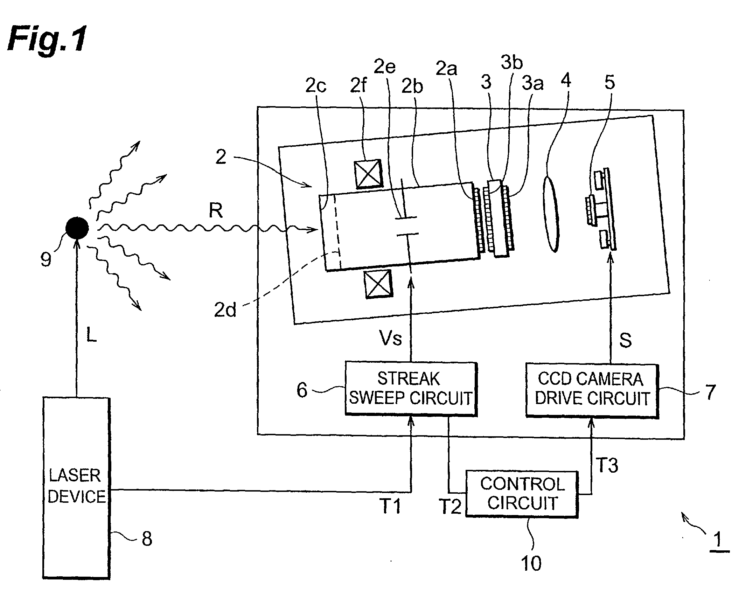

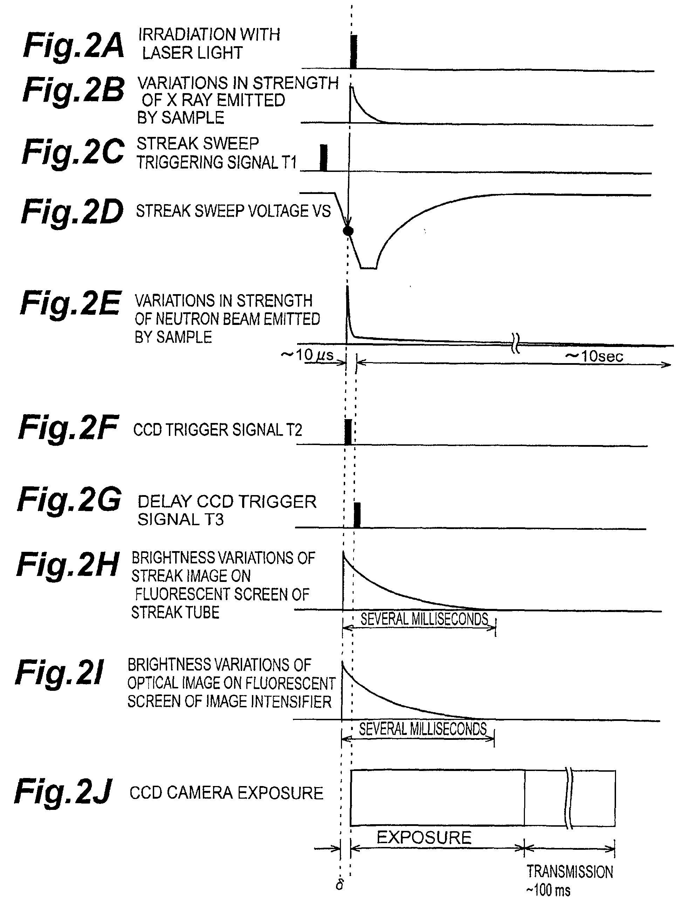

Fig. 1 is a schematic depicting the structure of a streak camera device pertaining to a first embodiment, and Figs. 2A, 2B, 2C, 2D, 2E, 2F, 2G, 2H, 2I, and 2J are timing charts designed to illustrate the operation of the streak camera device pertaining to the first embodiment.

The streak camera device 1 pertaining to this embodiment comprises a streak tube 2 for converting time-sequential intensity variation of light to be measured to a streak image, the image being displayed on a fluorescent screen 2a, an image intensifier 3 whereby the streak image is amplified and displayed on a fluorescent screen 3a, an interline CCD camera 5 whereby the amplified streak image formed on the fluorescent screen 3a of the image intensifier 3 is captured through an optical system 4, a CCD camera drive circuit 7 whereby the operating state of the interline CCD camera 5 is switched from a charge sweep-out operating state to an exposure operating state, a control circuit 10 whereby the timing by which the CCD camera drive circuit 7 switches the operating state of the interline CCD camera 5 from a charge sweep-out operating state to an exposure operating state is delayed in relation to the time at which measured light R (X ray, energy beam) is emitted, and a streak sweep circuit 6 for controlling the operation of the streak tube 2. A sample 9 (measurement object) and a laser device 8 for exciting the sample 9 are provided outside the streak camera device 1.

The streak tube 2 comprises a cylindrical tube 2b in which a vacuum is maintained. A photoelectric surface 2c is provided to the plane of the tube 2b on which measured light R is incident. The photoelectric surface 2c has a function whereby light is converted to electrons, and the electrons are emitted by the surface disposed opposite the incidence surface of measured light R when the measured light R strikes the photoelectric surface 2c.

An accelerating electrode 2d is disposed at a position that faces the photoelectric surface 2c inside the tube 2b. The accelerating electrode 2d is designed to accelerate the electrons generated by the photoelectric surface 2c. A pair of deflection plates 2e is disposed inside the tube 2b at a position located on the opposite side from the photoelectric surface 2c in relation to the accelerating electrode 2d. A streak sweep voltage Vs is applied by the streak sweep circuit 6 to the deflection plates 2e. The electrons accelerated by the accelerating electrode 2d are deflected by the streak sweep voltage Vs. A fluorescent screen 2a is also disposed in the plane of the tube 2b opposite the plane in which measured light R is incident.

The electrons deflected by the accelerating electrode 2d collide with the fluorescent screen 2a. Since the fluorescent screen 2a emits light when the electrons collide therewith, an optical image (that is, a streak image) that corresponds to the distribution of the colliding electrons is formed on the fluorescent screen 2a. P-43 is used for the fluorescent screen 2a of the streak tube 2 in the present embodiment and in the second to fourth embodiments. A coil 2f is disposed on the outside of the tube 2b such that the lateral surface of the tube 2b is enclosed in the coil. The coil 2f serves to focus the electrons accelerated by the accelerating electrode 2d.

The image intensifier 3 (amplification means for amplifying streak images) is disposed such that the surface on which light is incident is located facing the fluorescent screen 2a of the streak tube 2. The image intensifier 3 contains an MCP (not shown) , which is an electron multiplier. When light emitted by the streak image on the fluorescent screen 2a of the streak tube 2 enters the image intensifier 3, electrons are emitted by the surface opposite the light incidence side of a photoelectric surface 3b disposed in the incidence plane. The electrons are multiplied by the MCP and caused to collide with the fluorescent screen 3a. As a result, an amplified streak image is formed on the fluorescent screen 3a.

In the interline CCD camera 5, the surface on which light is incident is disposed facing the fluorescent screen 3a of the image intensifier 3, and the camera functions to capture the optical image on the fluorescent screen 3a.

The CCD camera drive circuit 7 is designed to energize the interline CCD camera 5 and, in particular, has a function whereby the operating state of the interline CCD camera 5 is switched from a charge sweep-out operating state to an exposure operating state.

The control circuit 10 is designed to control the timing (exposure start timing) by which the CCD camera drive circuit 7 switches the operating state of the interline CCD camera 5 from a charge sweep-out operating state to an exposure operating state. Specifically, the control circuit 10 functions such that a delay CCD trigger signal T3 is transmitted to the CCD camera drive circuit 7 after a certain delay period δ has elapsed upon receipt of a CCD trigger signal T2 transmitted by the streak sweep circuit 6.

The operation of the streak camera device 1 thus configured will now be described with reference to Figs. 1 and 2A-2J.

The interline CCD camera 5 first establishes a charge sweep-out operating state with the aid of the CCD camera drive circuit 7 before the sample 9 is irradiated with laser light L from the laser device 8. In this operating state, the interline CCD camera 5 is in a discharged state because all the electric charges in the interline CCD camera 5 are transmitted outside.

The sample 9 is irradiated with pulsed laser light L (Fig. 2A), and measured light R (X ray) is emitted at the same time by the sample 9 (Fig. 2B). The measured light R enters the photoelectric surface 2c of the streak tube 2, and electrons are emitted at the same time by the surface opposite the side of the photoelectric surface 2c on which the measured light R is incident. The electrons are accelerated by the accelerating electrode 2d and propelled toward the fluorescent screen 2a. In this arrangement, the electrons continue to be emitted as long as the photoelectric surface 2c is irradiated with measured light R, and gradually travel toward the fluorescent screen 2a in a beam.

A streak sweep triggering signal T1 is transmitted to the streak sweep circuit 6 from the laser device 8 before the sample 9 is irradiated with laser light L (Fig. 2C). Upon receipt of the streak sweep triggering signal T1, the streak sweep circuit 6 provides the deflection plates 2e with a streak sweep voltage Vs whose value varies linearly with time (Fig. 2D) . The traveling electrons are deflected by the streak sweep voltage Vs and are caused to collide with the fluorescent screen 2a. The fluorescent screen 2a struck by the electrons emits light, and a streak image is formed on the fluorescent screen 2a.

The streak image is amplified by the image intensifier 3, and an amplified streak image is formed on the fluorescent screen 3a of the image intensifier 3. There is no time delay between the moment the sample 9 emits measured light R and the moment an amplified streak image is formed on the fluorescent screen 3a of the image intensifier 3, and the amplified streak image is formed on the fluorescent screen 3a of the image intensifier 3 at the same time as the measured light R is emitted.

In addition, the sample 9 is irradiated with pulsed laser light L, and a CCD trigger signal T2 is transmitted at the same time to the control circuit 10 by the streak sweep circuit 6 (Fig. 2F). In this case, the control circuit 10 receives the CCD trigger signal T2 at the same time as the CCD trigger signal T2 is transmitted by the streak sweep circuit 6. Upon receipt of the CCD trigger signal T2, the control circuit 10 transmits a delay CCD trigger signal T3 to the CCD camera drive circuit 7 after a certain delay period δ has elapsed (Fig. 2G).

The delay CCD trigger signal T3 is received by the CCD camera drive circuit 7 at the same time as the delay CCD trigger signal T3 is transmitted by the control circuit 10. The CCD camera drive circuit 7 receives the delay CCD trigger signal T3, and a command signal S is transmitted at the same time to the interline CCD camera 5. The operating state of the interline CCD camera 5 is switched from a charge sweep-out operating state to an exposure operating state at the same time as the command signal S is received. Specifically, exposure is started in the interline CCD camera 5 (Fig. 2J).

The amplified streak image formed on the fluorescent screen 3a of the image intensifier 3 is thus captured by the interline CCD camera 5 via the optical system 4.

As described above, the time at which measured light R is emitted by the sample 9 is concurrent with the time at which the control circuit 10 receives a CCD trigger signal T2. The same applies to the time at which a delay CCD trigger signal T3 is transmitted by the control circuit 10 and the time at which the operating state of the interline CCD camera 5 is switched from a charge sweep-out operating state to an exposure operating state. The time at which the delay CCD trigger signal T3 is transmitted by the control circuit 10 is delayed by a delay period δ in relation to the time at which the control circuit 10 receives the CCD trigger signal T2.

Consequently, the time at which the operating state of the interline CCD camera 5 is switched from a charge sweep-out operating state to an exposure operating state that is, the time at which exposure is started in the interline CCD camera 5 is delayed by a delay period δ in relation to the time at which the sample 9 emits measured light R.

The streak camera device of the present embodiment is configured such that exposure is started in the interline CCD camera 5 by the control circuit 10 after a certain delay period δ in relation to the time at which measured light R is emitted, so exposure is started in the interline CCD camera 5 after the neutron beam emitted by the sample 9 has sufficiently decayed, as can be seen from a comparison between Figs. 2E and 2J.

The effect of the neutron beam or the like on the interline CCD camera 5 during exposure is therefore reduced. In addition, the CCD camera 5 is an interline type, and this camera is brought to a charge sweep-out operating state by the CCD camera drive circuit 7 before exposure is started. The result is that even when a neutron beam that is emitted at the same time as the X ray or alpha particles or protons that are generated as secondary particles by the neutron beam enter the interline CCD camera 5, the electric charge induced in the interline CCD camera 5 by this particle beam is swept out and is not detected as noise.

In addition, a streak image is captured by the interline CCD camera 5 because this image continues to glow as a result of the afterglow effect exhibited by the fluorescent screen 2a of the streak tube 2 at the time exposure is started in the interline CCD camera 5 (see Figs. 2H, 2I, and 2J).

It is therefore possible to measure a streak image formed by measured light R in a state in which the noise created by a neutron beam or the like is reduced.

### (Second Embodiment)

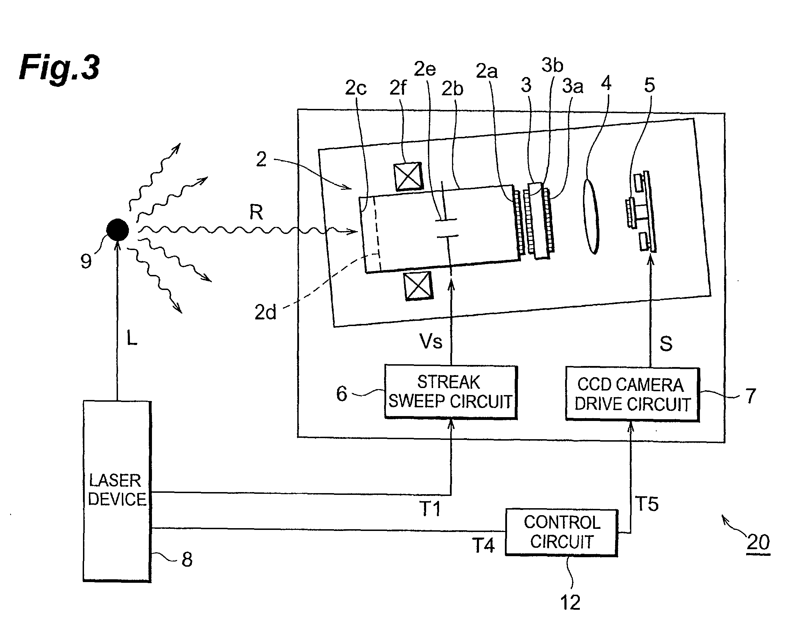

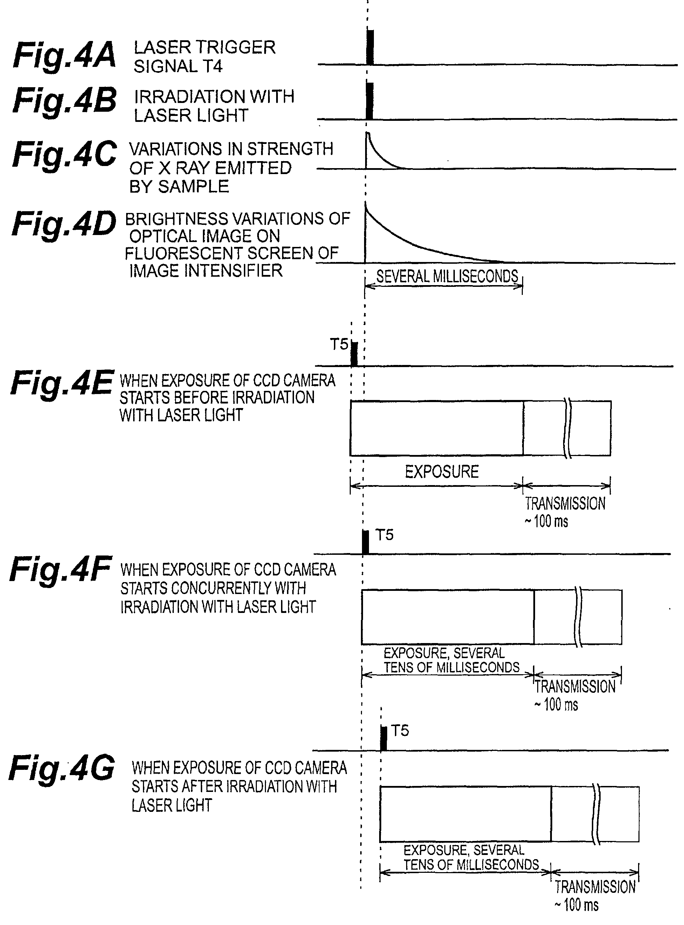

Fig. 3 is a schematic depicting the structure of a streak camera device pertaining to a second embodiment, and Figs. 4A, 4B, 4C, 4D, 4E, 4F, and 4G are timing charts designed to illustrate the operation of the streak camera device pertaining to the second embodiment.

In the streak camera device 20 pertaining to the second embodiment, a control circuit 12 is connected, instead of the control circuit 10 used in the first embodiment, to the laser device 8 and CCD camera drive circuit 7, as shown in Fig. 3. The control circuit 12 is used to control the timing by which laser light L is emitted by the laser device 8 toward the sample 9, and the timing by which the CCD camera drive circuit 7 switches the operating state of the interline CCD camera from a charge sweep-out operating state to an exposure operating state.

In the streak camera device 20 pertaining to the second embodiment, the series of operations in which the streak image formed by the measured light R emitted by the sample 9 is amplified by the image intensifier 3, and an amplified streak image is formed on the fluorescent screen 3a of the image intensifier 3 is identical to the operations performed by the streak camera device 1 of the first embodiment, as shown in Figs. 4A, 4B, 4C, and 4D. The description that follows is limited to operating differences alone.

In the streak camera device 20, a laser trigger signal T4 is transmitted from the control circuit 12 to the laser device 8, and the laser device 8 that has received the laser trigger signal T4 emits laser light L toward the sample 9. A CCD trigger signal T5 is transmitted from the control circuit 12 to the CCD camera drive circuit 7. The operating state of the interline CCD camera 5 is switched from a charge sweep-out operating state to an exposure operating state by a command signal S from the CCD camera drive circuit 7 that has received the CCD trigger signal T5. (In other words, exposure is started.)

In this case, the timing by which exposure is started in the interline CCD camera 5 can be arbitrarily established by the transmission time difference between the laser trigger signal T4 and the CCD trigger signal T5 transmitted by the control circuit 12. For example, exposure is started in the interline CCD camera 5 before the time at which measured light R is emitted if the CCD trigger signal T5 is transmitted prior to the laser trigger signal T4 (Fig. 4E).

Exposure is started in the interline CCD camera 5 simultaneously with the emission of measured light R if the CCD trigger signal T5 and laser trigger signal T4 are transmitted at the same time (Fig. 4F) . Exposure is started in the interline CCD camera 5 following the emission of measured light R if the CCD trigger signal T5 is transmitted after the laser trigger signal T4 (Fig. 4G).

Configuring the second embodiment in this manner allows the timing (exposure start timing) by which the CCD camera drive circuit 7 switches the operating state of the interline CCD camera 5 from a charge sweep-out operating state to an exposure operating state to be arbitrarily set between a moment that precedes by a certain period the time at which measured light R is emitted by the control circuit 12, and a moment that lags behind this time by a certain period, making it possible to perform measurements while monitoring the ratio (so-called S/N ratio) of the signal to be obtained and the noise brought about by a neutron beam or the like. Measurement accuracy can therefore be improved.

The control circuit 12 in the streak camera device 20 of the second embodiment is configured such that the exposure start timing of the interline CCD camera is set between a moment that precedes by a certain period the time at which measured light R is emitted and a moment that lags behind this time by a certain period, and the settable range should be established with consideration for the sample material, the afterglow period of the streak tube 2 and the fluorescent screen 3a of the image intensifier 3, the intensity of laser light, the irradiation period of laser light, and other measurement conditions.

### (Third Embodiment)

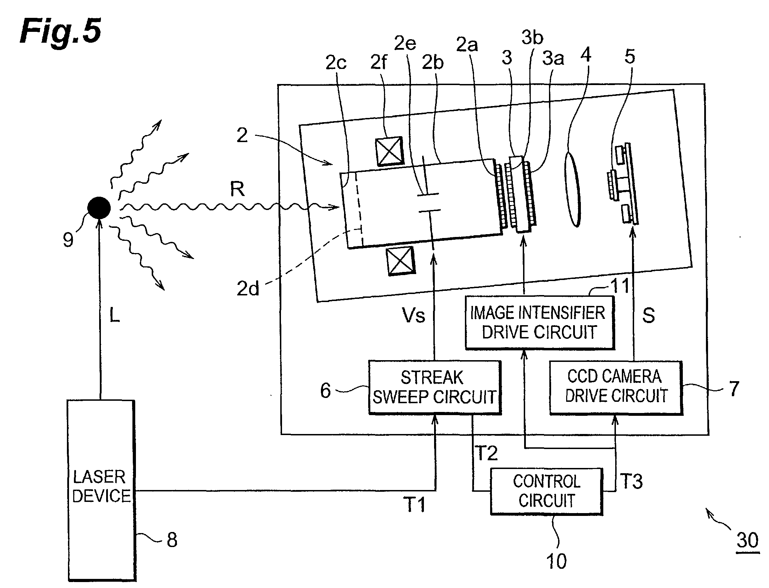

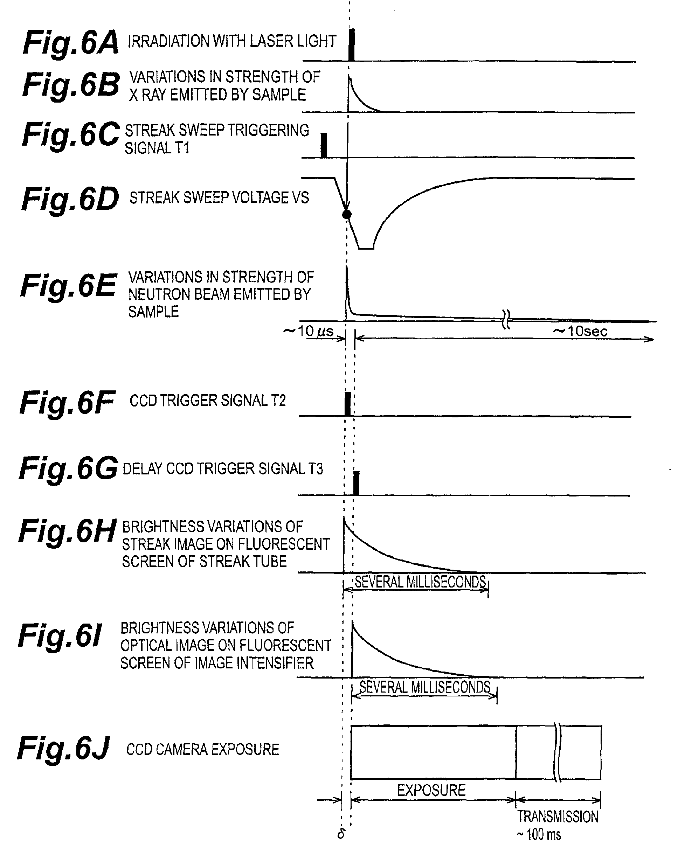

Fig. 5 is a schematic depicting the structure of a streak camera device pertaining to a third embodiment, and Figs. 6A, 6B, 6C, 6D, 6E, 6F, 6G, 6H, 6I, and 6J are timing charts designed to illustrate the operation of the streak camera device pertaining to the third embodiment.

In the streak camera device 30 pertaining to the third embodiment, an image intensifier drive circuit 11 designed to energize the amplification means for amplifying streak images is provided in addition to the structure of the first embodiment, as shown in Fig. 5. The image intensifier drive circuit 11 is connected to the control circuit 10 and is presented with a delay CCD trigger signal T3. In this case, the image intensifier drive circuit 11 and control circuit 10 constitute a drive means whereby the amplification means (image intensifier 3) for amplifying streak images is energized while delayed relative to the time at which measured light R is emitted.

In the streak camera device of the third embodiment, the operations by which temporal variations in the intensity of measured light R emitted by the sample 9 are displayed as streak images on the fluorescent screen 2a of the streak tube 2 are the same as the above-described operations of the first embodiment, as shown in Figs. 6A, 6B, 6C, 6D, 6E, 6F, 6G, 6H, and 6J. The description that follows is limited to features that are different from the operation of the first embodiment.

The delay CCD trigger signal T3 from the control circuit 10 is transmitted not only to the CCD camera drive circuit 7 but also to the image intensifier drive circuit 11. The image intensifier drive circuit 11 receives the delay CCD trigger signal T3, and voltage is applied at the same time to an MCP (not shown) inside the image intensifier 3. At this point, a streak image continues to glow on the fluorescent screen 2a of the streak tube 2, so this streak image is amplified by the image intensifier 3, and an amplified streak image is formed on the fluorescent screen 3a of the image intensifier 3 (Fig. 6I).

The delay CCD trigger signal T3 is received by the image intensifier drive circuit 11 and is at the same time received by the CCD camera drive circuit 7, so the timing by which the CCD camera drive circuit 7 switches the operating state of the interline CCD camera from a charge sweep-out operating state to an exposure operating state is concurrent with the application of a voltage to the MCP inside the image intensifier 3 (Figs. 6G, 6I, and 6J). Specifically, the operating state of the interline CCD camera 5 is switched from a charge sweep-out operating state to an exposure operating state, and the amplified streak image on the fluorescent screen 3a is captured by the interline CCD camera 5 via the optical system 4 at the same time as the amplified streak image is formed on the fluorescent screen 3a of the image intensifier 3.

As mentioned above, the third embodiment is configured such that an image intensifier drive circuit 11 is provided and that the image intensifier drive circuit 11 receives a delay CCD trigger signal T3 from the control circuit 10, making it possible to delay not only the exposure of the interline CCD camera 5 but also the application of voltage to the MCP (electron multiplier) inside the image intensifier 3.

For this reason, voltage is applied to the MCP after the neutron beam emitted by the sample 9 has decayed substantially, as can be seen from a comparison between Figs. 6E and 6I. As a result, the electrons induced in the MCP by the neutron beam (or alpha particles or protons generated as secondary particles by the neutron beam) are prevented from being multiplied by the MCP, and the effect of the neutron beam or the like on the MCP can be reduced.

### (Fourth Embodiment)

Following is a description of the streak camera device pertaining to a fourth embodiment, in which an image intensifier devoid of an MCP is used instead of the MCP-containing image intensifier 3 used in the first embodiment (see Fig. 1). Specifically, the photoelectric surface 3b and fluorescent screen 3a are disposed directly facing each other. To elaborate, the image intensifier comprises a photoelectric surface 3b disposed on the side of the streak tube 2 as well as a fluorescent screen 3a disposed on the side of the CCD camera 5, and the photoelectric surface 3b and fluorescent screen 3a face each other such that electrons generated by the photoelectric surface 3b are directly incident on the fluorescent screen 3a without passing through any components other than the electrode (a metal film provided inside the photoelectric surface 3b as needed) for accelerating these electrons. All other equipment components and measurement operations are the same as in the first embodiment.

The effect of a neutron beam or the like on the image intensifier is primarily limited to the MCP, so using an image intensifier devoid of such an MCP makes it possible to control the effect of the neutron beam or the like on the image intensifier.

The present invention is not limited by the above embodiments alone and allows various modifications to be made.

The first embodiment is configured such that a control circuit 10 is disposed between a streak sweep circuit 6 and a CCD camera drive circuit 7, but this is not the only possible option. The control circuit 10 may, for example, be disposed between the CCD camera drive circuit 7 and the CCD camera 5 if the exposure start timing of the interline CCD camera 5 can be delayed in relation to the time at which measured light R is emitted.

It is also possible that the above-mentioned second embodiment is provided with a drive means whereby an image intensifier 3, which is an amplification means for amplifying streak images, is energized while delayed in relation to the time at which measured light R is emitted and the timing by which the application of the voltage to the MCP is delayed. Another option is to delay the timing by which voltage is applied to the MCP.

The image intensifier constructed without the use of an MCP and employed in the streak camera device 30 of the fourth embodiment may also be used for the streak camera device 20 of the third embodiment.

Although a streak tube having P-43 as the fluorescent screen was used in each of the embodiments described above, the specific type of phosphorescent substance constituting the fluorescent screen should be determined with consideration for the afterglow time of the fluorescent screen and the period in which the neutron beam reaches its maximum.

The components affected by the neutron beam or the like are primarily the CCD camera and the MCP, although there is a possibility, albeit slight, that the neutron beam or the like will collide with the fluorescent screen 3a of the image intensifier 3, and an optical image will be formed by the neutron beam or the like on the fluorescent screen 3a. A phosphorescent substance with a short afterglow should preferably be used for the fluorescent screen 3a of the image intensifier 3 in order to prevent such a neutron beam or the like from affecting the fluorescent screen 3a of the image intensifier 3.

Specifically, reducing the afterglow time will cause an optical image formed by a neutron beam or the like on the fluorescent screen 3a to decay rapidly before exposure is started in the interline CCD camera 5 even when the neutron beam or the like collides with the fluorescent screen 3a of the image intensifier 3. It is therefore less likely that an optical image formed by a neutron beam or the like will be captured by the interline CCD camera 5. For this reason, the effect of the neutron beam or the like on the fluorescent screen can be reduced.

In the streak camera device described above, the timing by which the CCD camera drive circuit switches the operating state of the CCD camera from a charge sweep-out operating state to an exposure operating state is delayed in relation to the time at which measured light is emitted by a control circuit, making it possible to start CCD camera exposure after the neutron beam emitted by the sample has decayed.

As a result, it is possible to reduce the noise brought about by a neutron beam or by alpha particles or protons generated as secondary particles by the neutron beam during CCD camera exposure. In addition, electric charges induced by the neutron beam in the interline CCD camera can be swept out by employing an interline CCD camera and bringing this interline CCD camera into a charge sweep-out operating state before the start of exposure. As a result, the noise generated by a neutron beam or the like in the interline CCD camera can be reduced between the time at which the sample emits the neutron beam and measured light, and the time at which exposure is started.

Measurements can be conducted while the ratio (so-called S/N ratio) of the signal to be obtained and the noise brought about by a neutron beam or the like can be monitored by adopting an arrangement in which the streak camera device described above is provided with a control circuit whereby the timing by which the CCD camera drive circuit switches the operating state of the interline CCD camera from a charge sweep-out operating state to an exposure operating state is set between a moment that precedes by a certain period the time at which measured light is emitted and a moment that lags behind this time by a certain period. Measurement accuracy can therefore be improved.

In addition, electrons induced in the MCP by a neutron beam or the like are prevented from being multiplied because no voltage is applied to the MCP in the period during which the neutron beam is at its maximum. This is achieved by providing the above-described streak camera device with a drive means whereby the amplification means for amplifying streak images is energized while delayed in relation to the time at which measured light is emitted, and by causing this drive means to delay the timing by which voltage is applied to the MCP contained in the amplification means for amplifying streak images. It is therefore possible to reduce the noise generated in the amplification means by a neutron beam or the like.

In addition, using an amplification means without an MCP prevents a neutron beam or the like from affecting the MCP and makes it possible to eliminate the noise generated in the amplification means by such particle beams.

### Industrial Applicability

The present invention can be adapted to a streak camera device in which temporal variations in the intensity of measured light are registered as streak images.

## Claims

1. A streak camera device, comprising:
a streak tube for converting time-sequential intensity variation of light to be measured to a streak image;
amplification means for amplifying the streak image;
an interline CCD camera for capturing the streak image amplified by the amplification means;
a streak sweep circuit for controlling the operation of the streak tube;
a CCD camera drive circuit wherein the operating state of the interline CCD camera is switched from a charge sweep-out operating state to an exposure operating state; and
a control circuit wherein the timing by which the CCD camera drive circuit switches the operating state of the interline CCD camera from a charge sweep-out operating state to an exposure operating state is delayed in relation to the time at which the measured light is emitted.

2. The streak camera device according to claim 1, **characterized in that** the control circuit is configured such that the timing by which the CCD camera drive circuit switches the operating state of the interline CCD camera from a charge sweep-out operating state to an exposure operating state is set between a moment that precedes by a certain period the time at which measured light is emitted, and a moment that lags behind this time by a certain period.

3. The streak camera device according to claim 1, **characterized by** further comprising drive means for energizing the amplification means with a delay in relation to the time at which measured light is emitted.

4. The streak camera device according to claim 1, **characterized in that** the amplification means is configured without the use of an MCP.

5. A streak camera device, **characterized in that** an interline CCD camera is disposed behind a streak tube for receiving an energy beam from a measurement object, and the exposure start timing of the CCD camera is set subsequent to the receipt of the energy beam received by the streak tube from the measurement object.

6. The streak camera device according to claim 5, **characterized in that** the exposure start timing of the CCD camera is delayed by approximately tens of microseconds in relation to the time at which the energy beam is received.

7. The streak camera device according to claim 5, **characterized in that** an image intensifier is provided between the streak tube and the CCD camera.

8. The streak camera device according to claim 5, **characterized in that** the image intensifier comprises a photoelectric surface disposed on the side of the streak tube, and a fluorescent screen disposed on the side of the CCD camera; and the photoelectric surface and fluorescent screen face each other such that electrons generated by the photoelectric surface are directly incident on the fluorescent screen without passing through any components other than an electrode for accelerating these electrons.
